# EUROPEAN PATENT APPLICATION

(11) **EP 4 788 051 A1**
(43) Date of publication of application: **05.08.2026**
(21) Application number: 24872924.6
(22) Date of filing: 25.09.2024
(51) Int. Cl.: H04W 76/28, H04W 24/08, H04W 52/02, H04W 72/232, H04W 72/0446, H04W 72/0457, H04L 27/26

(54) **METHOD BY USER EQUIPMENT, DEVICE, AND STORAGE MEDIUM, AND METHOD BY BASE STATION AND BASE STATION**

(30) Priority: 26.09.2023 KR 20230129847; 08.10.2023 US 202363543099 P; 02.11.2023 KR 20230150017
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); YANG, Suckchel, Seoul 06772 (KR)
(74) Representative: Mooser, Sebastian Thomas
(86) International application number: PCT/KR2024/014526
(87) International publication number: WO 2025/071216

(57) **Abstract**

When the UE deactivates a cell in which first cell DTX/DRX configuration is activated and then receives an activation command for the cell, the UE may activate second cell DTX/DRX configuration for the cell while activating the cell.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

As the number of services/user equipments (UEs) that a network needs to support increases rapidly, the needs for not only power saving for UEs but also energy saving for the network are gradually increasing.

### DISCLOSURE

### Technical Problem

One object of the present disclosure is to provide methods and procedures for network energy conservation.

The objects to be achieved with the present disclosure are not limited to what has been particularly described hereinabove and other objects not described herein will be more clearly understood by persons skilled in the art from the following detailed description.

### Technical Solution

In an aspect of the present disclosure, a method performed by a user equipment (UE) is provided.

In another aspect of the present disclosure, an apparatus is provided. The apparatus includes at least one processor, and at least one computer memory operably connectable to the at least one processor and storing instructions that, when executed, cause the at least one processor to perform operations for a UE.

In another aspect of the present disclosure, a non-transitory computer-readable storage medium is provided. The storage medium stores at least one program code including instructions that, when executed, cause at least one processor to perform operations for a UE.

The method or the operations may include receiving a first cell discontinuous transmission (DTX)/discontinuous reception (DRX) configuration for a serving cell, activating the first DTX/DRX configuration, deactivating the serving cell for which the first DTX/DRX configuration is activated, receiving an activation command for the deactivated serving cell, and based on the activation command, i) activating the serving cell, and ii) activating a second cell DTX/DRX configuration for the serving cell.

In an aspect of the present disclosure, a method performed by a base station (BS) is provided.

In another aspect of the present disclosure, a BS is provided. The BS may include at least one processor, and at least one memory operably connectable to the at least one processor and storing instructions that, when executed, cause the at least one processor to perform operations for a UE.

The method or the operations may include transmitting a first cell DTX/DRX configuration for a serving cell, activating the first DTX/DRX configuration, deactivating the serving cell for which the first DTX/DRX configuration is activated, transmitting an activation command for the deactivated serving cell, and based on the activation command, i) activating the serving cell, and ii) activating a second cell DTX/DRX configuration for the serving cell.

In each aspect of the present disclosure, information about a default cell DTX/DRX configuration for the serving cell may be provided through radio resource control (RRC) signaling.

In each aspect of the present disclosure, the activation command may include information about a default cell DTX/DRX configuration for the serving cell.

In each aspect of the present disclosure, information about a default cell DTX/DRX configuration for the serving cell may be provided through downlink control information that schedules the activation command.

In each aspect of the present disclosure, an RRC configuration including a plurality of DTX/DRX configurations for the serving cell may be provided.

In each aspect of the present disclosure, information about a default cell DTX/DRX configuration among the plurality of DTX/DRX configurations may be provided.

In each aspect of the present disclosure, the second cell DTX/DRX configuration may be the default cell DTX/DRX configuration.

In each aspect of the present disclosure, information related to maintaining a cell DTX/DRX activation indication for the serving cell may be provided. Based on the information related to maintaining the cell DTX/DRX activation indication being a first value, the first cell DTX/DRX configuration may be used as the second cell DTX/DRX configuration.

The foregoing solutions are merely a part of the examples of the present disclosure and various examples into which the technical features of the present disclosure are incorporated may be derived and understood by persons skilled in the art from the following detailed description.

### Advantageous Effects

According to implementations of the present disclosure, energy saving methods and procedures for a network, base station (BS), and/or user equipment (UE) may be provided.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

The accompanying drawings, which are included to provide a further understanding of the present disclosure, illustrate examples of implementations of the present disclosure and together with the detailed description serve to explain implementations of the present disclosure:
FIG. 1 illustrates an example of a communication system 1 to which implementations of the present disclosure are applied;
FIG. 2 is a block diagram illustrating examples of communication devices capable of performing a method according to the present disclosure;
FIG. 3 illustrates another example of a wireless device capable of performing implementation(s) of the present disclosure;
FIG. 4 illustrates an example of a frame structure used in a 3rd generation partnership project (3GPP)-based wireless communication system;
FIG. 5 illustrates a resource grid of a slot;
FIG. 6 illustrates physical channels and a signal transmission/reception procedure using the physical channels in a 3rd generation partnership project based (3GPP-based) communication system as an exemplary wireless communication system;
FIG. 7 illustrates a discontinuous reception (DRX) operation applicable to implementation(s) of the present disclosure;
FIG. 8 illustrates a case in which a long DRX cycle and a short DRX cycle are configured;
FIG. 9 illustrates examples of applying a cell DTX/DRX configuration to an SCell which is deactivated and then activated again according to some implementations of the present disclosure;
FIG. 10 illustrates some implementations of the present disclosure for the start of a cell DTX/DRX pattern during BWP switching;
FIG. 11 is a flowchart illustrating a user equipment (UE) operation according to some implementations of the present disclosure; and
FIG. 12 is a flowchart illustrating a base station (BS) operation according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, a multi-carrier frequency division multiple access (MC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE) (i.e., GERAN), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.304, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

In a dual connectivity (DC) operation, the term special cell (SpCell) refers to a Pcell of a master cell group (MCG) or a primary secondary cell (PSCell) of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. The PSCell is a primary Scell of the SCG. For a UE in RRC_CONNECTED state, which is not configured with CA or DC, only one serving cell including only the Pcell is present. For a UE in RRC_CONNECTED state, which is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE that is configured with CA and is not configured with DC, a Pcell PUCCH group (also called a primary PUCCH group) including the Pcell and 0 or more Scells and an Scell PUCCH group (also called a secondary PUCCH group) including only Scell(s) may be configured. For the Scell, an Scell on which a PUCCH associated with the corresponding cell is transmitted (hereinafter, a PUCCH Scell) may be configured. An Scell for which a PUCCH Scell is indicated belongs to the Scell PUCCH group (i.e., the secondary PUCCH group) and PUCCH transmission of related uplink control information (UCI) is performed on the PUCCH Scell. If a PUCCH Scell is not indicated for an Scell or a cell which is indicated for PUCCH transmission for the Scell is a Pcell, the Scell belongs to the Pcell PUCCH group (i.e., the primary PUCCH group) and PUCCH transmission of related UCI is performed on the Pcell. Hereinbelow, if the UE is configured with the SCG and some implementations of the present disclosure related to a PUCCH are applied to the SCG, the primary cell may refer to the PSCell of the SCG. If the UE is configured with the PUCCH Scell and some implementations of the present disclosure related to the PUCCH are applied to the secondary PUCCH group, the primary cell may refer to the PUCCH Scell of the secondary PUCCH group.

The UE may be configured with a PUCCH-sSCell, which is an Scell for PUCCH cell switching, in addition to the Pcell and the PUCCH Scell. For example, the UE may be provided with the PUCCH-sSCell by an RRC parameter *pucch-sSCell*. The UE may be provided with a periodic cell switching pattern for PUCCH transmissions by an RRC parameter *pucch-sSCellPattern*. Each bit of *pucch-sSCellPattern* may correspond to a slot according to a reference subcarrier spacing (SCS) configuration, and indicate the PCell or the PUCCH-sSCell as a cell for PUCCH transmissions during the slot of the reference SCS configuration. The UE does not transmit a PUCCH on a cell which is not indicated as a cell for PUCCH transmissions out of the PCell and the PUCCH-sSCell by the periodic cell switching pattern. When the UE is configured with PUCCH cell switching based on a dynamic indication in a DCI format, the DCI format associated with generation of HARQ-ACK information by the UE may include a PUCCH cell indicator field indicating whether a PUCCH transmission with the HARQ-ACK information from the UE is on the PCell or the PUCCH-sSCell.

In the present disclosure, the term PUCCH cell is used to refer to a cell on which PUCCH resources are configured. The PCell, the PUCCH Scell, or the PUCCH-sSCell may correspond to a PUCCH cell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUCCH/PUSCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DCI/DL data on or through a PBCH/PDCCH/PDSCH, respectively.

In this specification, a radio resource (e.g., a time-frequency resource) scheduled or configured to the UE by the BS for transmission or reception of the PUCCH/PUSCH/PDSCH may be referred to as a PUCCH/PUSCH/PDSCH resource.

Since a communication device receives a synchronization signal (SS), DMRS, CSI-RS, PRS, PBCH, PDCCH, PDSCH, PUSCH, and/or PUCCH in the form of radio signals on a cell, the communication device may not select and receive radio signals including only a specific physical channel or a specific physical signal through a radio frequency (RF) receiver, or may not select and receive radio signals without a specific physical channel or a specific physical signal through the RF receiver. In actual operations, the communication device receives radio signals on the cell via the RF receiver, converts the radio signals, which are RF band signals, into baseband signals, and then decodes physical signals and/or physical channels in the baseband signals using one or more processors. Thus, in some implementations of the present disclosure, not receiving physical signals and/or physical channels may mean that a communication device does not attempt to restore the physical signals and/or physical channels from radio signals, for example, does not attempt to decode the physical signals and/or physical channels, rather than that the communication device does not actually receive the radio signals including the corresponding physical signals and/or physical channels.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

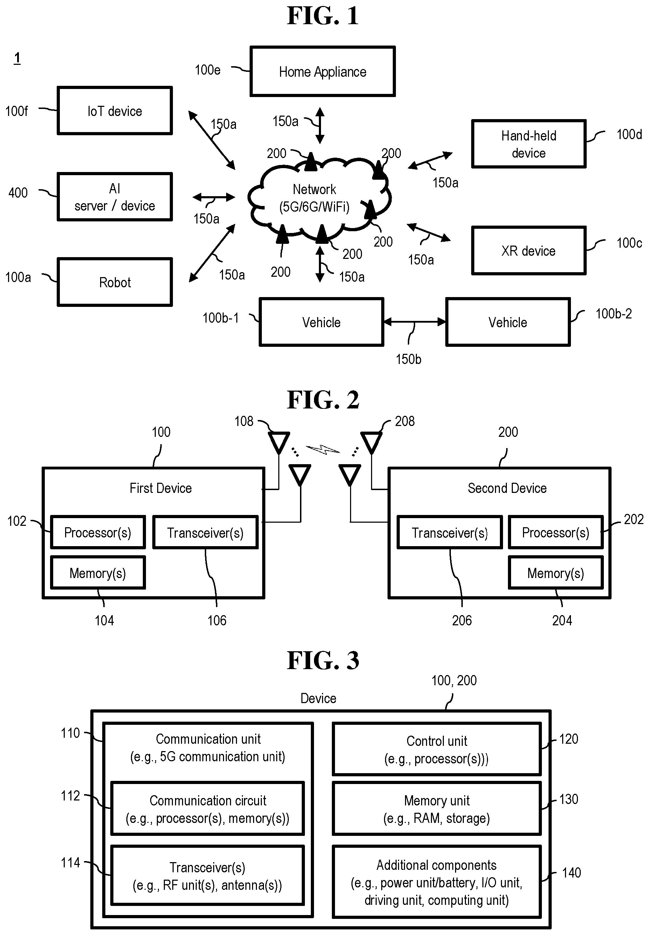

FIG. 1 illustrates an example of a communication system 1 to which implementations of the present disclosure are applied. Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure. Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the below-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the below-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the below-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the below-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

The wireless communication technology implemented in the wireless devices 100 and 200 of the present disclosure may include narrowband Internet of things for low-power communication as well as LTE, NR, and 6G. For example, the NB-IoT technology may be an example of low-power wide-area network (LPWAN) technologies and implemented in standards such as LTE Cat NB1 and/or LTE Cat NB2. However, the NB-IoT technology is not limited to the above names. Additionally or alternatively, the wireless communication technology implemented in the wireless devices XXX and YYY of the present disclosure may perform communication based on the LTE-M technology. For example, the LTE-M technology may be an example of LPWAN technologies and called by various names including enhanced machine type communication (eMTC). For example, the LTE-M technology may be implemented in at least one of the following various standards: 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, etc., but the LTE-M technology is not limited to the above names. Additionally or alternatively, the wireless communication technology implemented in the wireless devices XXX and YYY of the present disclosure may include at least one of ZigBee, Bluetooth, and LPWAN in consideration of low-power communication, but the wireless communication technology is not limited to the above names. For example, the ZigBee technology may create a personal area network (PAN) related to small/low-power digital communication based on various standards such as IEEE 802.15.4 and so on, and the ZigBee technology may be called by various names.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure. Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non- volatile memory, a transitory memory, a non-transitory memory and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable (non-volatile or non-transitory) storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

In the present disclosure, a computer program may include program code stored on at least one computer-readable (non-volatile) storage medium and, when executed, configured to perform operations according to some implementations of the present disclosure or cause at least one processor to perform the operations according to some implementations of the present disclosure. The computer program may be provided in the form of a computer program product. The computer program product may include at least one computer-readable (non-volatile) storage medium.

A communication device of the present disclosure includes at least one processor; and at least one computer memory operably connected to the at least one processor and configured to store instructions for causing, when executed, the at least one processor to perform operations according to example(s) of the present disclosure described later.

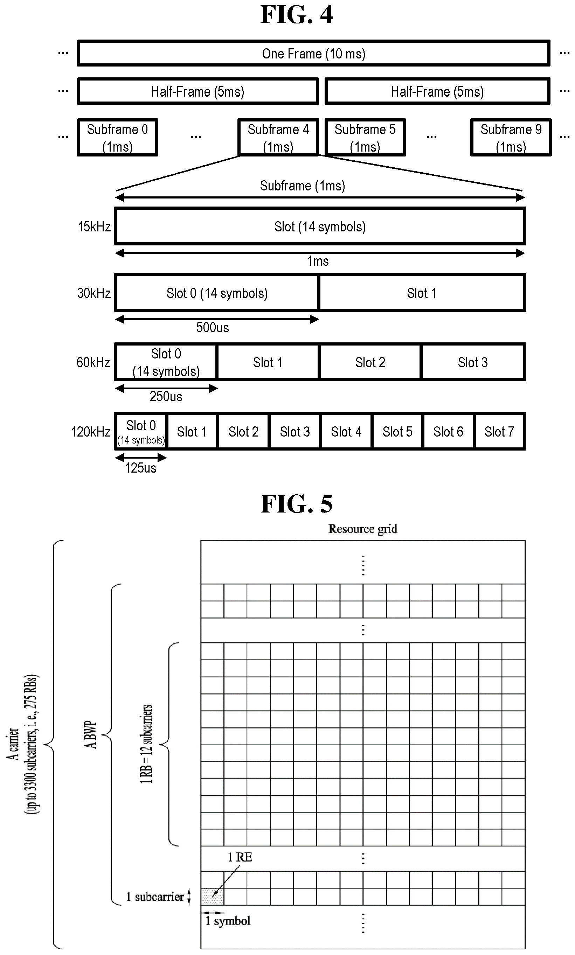

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(Δfₘₐₓ*N_{f}) where Δfₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. Tₛ and T_{c} have the relationship of a constant κ = Tₛ/T_{c} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subtrame,u}ₛₗₒₜ) per subframe.

**Table 1**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u*}15 kHz.

**Table 2**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots may be indexed within a subframe in ascending order as follows: n^{u}ₛ E {0, ..., n^{subframe,u}ₛₗₒₜ - 1} and indexed within a frame in ascending order as follows: n^{u}_{s,f} E {0, ..., n^{frame,u}ₛₗₒₜ - 1}.

FIG. 5 illustrates a resource grid of a slot. The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subtrame,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p*, a subcarrier spacing configuration *u*, and a transmission link (DL or UL). The carrier bandwidth *N*^{size,u}_{grid} for the subcarrier spacing configuration *u* is given to the UE by a higher layer parameter (e.g., RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index *k* in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration *u*. The center of subcarrier 0 of CRB 0 for the subcarrier spacing configuration *u* is equal to 'Point A' which serves as a common reference point for RB grids. The PRBs for subcarrier spacing configuration *u* are defined within a bandwidth part (BWP) and numbered from 0 to *N*^{size,u}_{BWP,i}-1, where i is a number of the BWP. The relation between a PRB n_{PRB} in a BWP i and a CRB n^{u}_{CRB} is given by: n^{u}_{PRB} = n^{u}_{CRB} + *N*^{size,u}_{BWP*,*i}, where *N*^{size}_{BWP,i} is a CRB in which the BWP starts relative to CRB 0. The BWP includes a plurality of consecutive RBs in the frequency domain. For example, the BWP may be a subset of contiguous CRBs defined for a given numerology uᵢ in the BWP i on a given carrier. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

For each serving cell in a set of DL BWPs or UL BWPs, the network may configure at least an initial DL BWP and one (if the serving cell is configured with uplink) or two (if supplementary uplink is used) initial UL BWPs. The network may configure additional UL and DL BWPs. For each DL BWP or UL BWP, the UE may be provided the following parameters for the serving cell: i) an SCS; ii) a CP; iii) a CRB *N*^{start}_{BWP} = *O*_{carrier} + *RB*ₛₜₐᵣₜ and the number of contiguous RBs *N*^{size}_{BWP} = L_{RB} provided by an RRC parameter *locationAndBandwidth*, which indicates an offset *RB*ₛₑₜ and a length *L*_{RB} as a resource indicator value (RIV) on the assumption of *N*^{start}_{BWP} = 275, and a value *O*_{carrier} provided by an RRC parameter *offsetToCarrier* for the SCS; an index in the set of DL BWPs or UL BWPs; a set of BWP-common parameters; and a set of BWP-dedicated parameters.

BWP switching for a serving cell may be used to activate an inactive BWP and deactivate an active BWP at once. BWP switching may be controlled by a PDCCH indicating a DL assignment or a UL grant, by a *bwp-InactivityTimer*, by RRC signaling, or by a MAC entity itself upon initiation of a random access procedure or upon detection of consistent LBT failures on an SpCell. When there is a PDCCH transmission/reception or a data transmission/reception in the BWP, the *bwp-InactivityTimer* is started or restarted, and upon expiration of the *bwp-InactivityTimer*, the UE falls back to a default BWP.

Virtual resource blocks (VRBs) may be defined within the BWP and indexed from 0 to *N*^{size,u}_{BWP,i}-1, where i denotes a BWP number. The VRBs may be mapped to PRBs according to interleaved mapping or non-interleaved mapping. In some implementations, VRB n may be mapped to PRB n for non-interleaved VRB-to-PRB mapping.

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

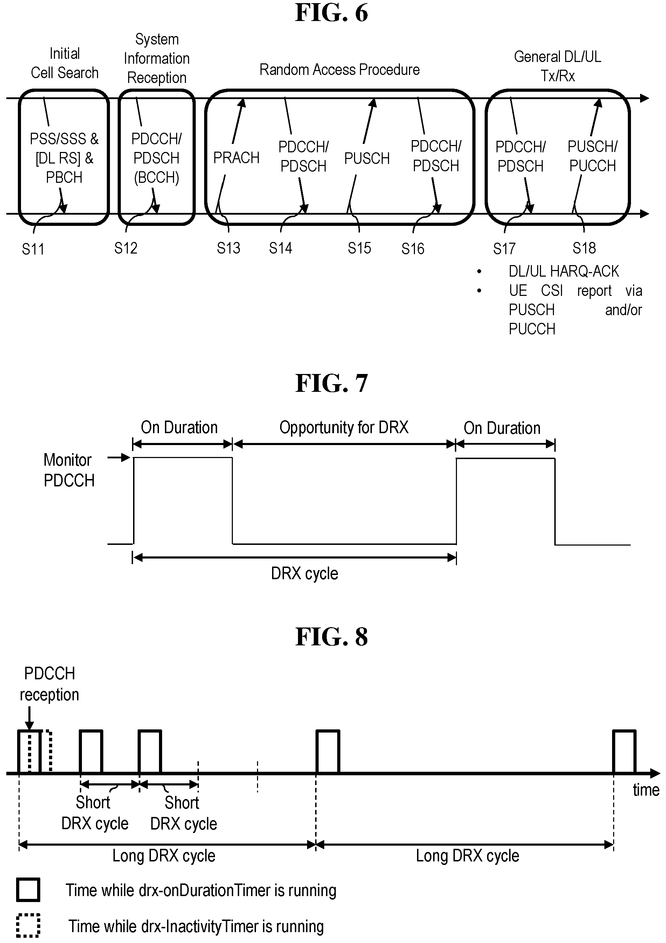

FIG. 6 is a diagram illustrating physical channels and a signal transmission/reception procedure using the physical channels in a 3GPP-based communication system as an exemplary wireless communication system.

When the UE is powered on or when the UE has been disconnected from the wireless communication system, the UE searches for a cell to camp on and performs initial cell search involving synchronization with a BS in the cell (S11). For the initial cell search, the UE receives a synchronization signal block (SSB) (also referred to as a SSB/PBCH block) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may camp on the cell. Subsequently, the UE may monitor a PDCCH in the cell and acquire more specific system information by receiving a PDSCH based on DCI carried on the PDCCH (S12).

Subsequently, to complete connection to the BS, the UE may perform a random access procedure (S13 to S16). In the random access procedure, for example, the UE may transmit a preamble on a PRACH (S13) and receive a PDCCH and a random access response (RAR) for the preamble on a PDSCH corresponding to the PDCCH (S14). When the UE fails in receiving the RAR directed to the UE, the UE may attempt to retransmit the preamble. In the case of contention-based random access, the UE may transmit a PUSCH based on a UL resource assignment included in the RAR (S15), and perform a contention resolution procedure including reception of a PDCCH and a PDSCH corresponding to the PDCCH (S16).

After the above procedure, the UE may receive a PDCCH/PDSCH from the BS (S17) and transmit a PUSCH/PUCCH to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), and/or a rank indication (RI). In general, UCI is transmitted on the PUCCH. However, when control information and data should be transmitted simultaneously, the control information may be transmitted on the PUSCH. In addition, the UE may transmit the UCI aperiodically on the PUSCH, upon receipt of a request/command from a network.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

A PDSCH is a physical layer DL channel for DL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port.

For UL-SCH data transmission, the UE needs to have UL resources available to the UE, and for DL-SCH data reception, the UE needs to have DL resources available to the UE. The UL and DL resources are assigned to the UE through resource allocation by the BS. Resource allocation may include time domain resource allocation (TDRA) and frequency domain resource allocation (FDRA). In the present disclosure, UL resource allocation is also referred to as an UL grant, and DL resource allocation is also referred to as a DL assignment. The UL grant may be dynamically received by the UE on a PDCCH or in an RAR, or the UL grant may be semi-persistently configured to the UE through RRC signaling from the BS. The DL assignment may be dynamically received by the UE on a PDCCH or semi-persistently configured to the UE through RRC signaling from the BS.

On UL, the BS may dynamically allocate UL resources to the UE through PDCCH(s) addressed to a temporary identifier (cell radio network temporary identifier, C-RNTI). The UE monitors the PDCCH(s) to detect possible UL grants for UL transmission. The BS may allocate the UL resources using a configured grant (CG) for the UE. Two types of configured grants, Type 1 and Type 2, may be used. In the case of Type 1, the BS directly provides a configured UL grant (including a periodicity) via RRC signaling. In the case of Type 2, the BS configures the periodicity of an RRC-configured UL grant via RRC signaling and may signal and activate or deactivate the configured UL grant through a PDCCH addressed to a configured scheduling RNTI (CS-RNTI). For example, in the case of Type 2, the PDCCH addressed to the CS-RNTI indicates that the corresponding UL grant may be implicitly reused according to the periodicity configured via RRC signaling until deactivation.

On DL, the BS may dynamically allocate DL resources to the UE through PDCCH(s) addressed to a C-RNTI. The UE monitors the PDCCH(s) to detect possible DL assignments. The BS may allocate the DL resources to the UE using semi-persistent scheduling (SPS). The BS may configure the periodicity of DL assignments configured via RRC signaling and signal and activate or deactivate the configured DL assignments through a PDCCH addressed to a CS-RNTI. For example, the PDCCH addressed to the CS-RNTI indicates that the corresponding DL assignment may be implicitly reused according to the periodicity configured via RRC signaling until deactivation.

A CORESET, which is a set of time-frequency resources on which the UE is capable of monitoring a PDCCH, may be defined and/or configured. The CORESET has a time duration of one to three OFDM symbols and includes a set of PRBs. The PRBs included in the CORESET and the CORESET duration may be provided to the UE through higher layer (e.g., RRC) signaling. The UE may monitor a set of PDCCH candidates in configured CORESET(s) according to corresponding search space sets. In the present disclosure, monitoring implies decoding (blind decoding) of each PDCCH candidate based on monitored DCI formats.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration.

A UE monitors a set of PDCCH candidates in one or more CORESETs on the active DL BWP on each activated serving cell configured with PDCCH monitoring according to corresponding search space sets where monitoring implies receiving each PDCCH candidate and decoding according to the monitored DCI formats.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

**UE Discontinuous Reception (DRX)**

To reduce power consumption, the UE uses DRX. The UE operating based on DRX repeatedly turns its reception operation on and off. The characteristics of DRX, which is used to reduce unnecessary power consumption of the UE, are as follows. For DRX, there are separate defined structures: a structure (hereinafter, referred to as I-DRX) for a UE in an RRC_IDLE state where an RRC connection has not been set up between the UE and the BS, and a structure (hereinafter, referred to as C-DRX) for a UE in an RRC_CONNECTED state where an RRC connection has been set up between the UE and the BS. Both DRX structures are designed to define a periodical interval where the UE may expect to receive DL signals (e.g., an active time or on-duration period), so that unnecessary power consumption is reduced in the other periods. In particular, in the case of C-DRX, the start position of the on-duration period is periodically defined according to NR Rel-16 specifications. In this case, the size (i.e., DRX cycle) of the configured period may be determined/configured through higher layer signaling such as RRC signaling provided by the BS to the UE.

FIG. 7 illustrates a discontinuous reception (DRX) operation. Specifically, FIG. 7 shows a DRX cycle for a UE in the RRC_CONNECTED state.

Referring to FIG. 7, a DRX cycle includes an On Duration and an Opportunity for DRX. The DRX cycle defines a time interval between periodic repetitions of the On Duration followed by an inactivity possible period. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, the UE may perform PDCCH monitoring/reception discontinuously in the time domain in the procedure and/or method according to implementation(s) of the present disclosure. For example, when DRX is configured, PDCCH reception occasions (e.g., slots with PDCCH search spaces) may be configured discontinuously according to a DRX configuration in the present disclosure. On the contrary, when DRX is not configured, the UE may perform PDCCH monitoring/reception continuously in the time domain. For example, when DRX is not configured, PDCCH reception occasions (e.g., slots with PDCCH search spaces) may be configured continuously in the present disclosure. Irrespective of whether DRX is configured, PDCCH monitoring may be restricted during a time period configured as a measurement gap. DRX configuration information is received through higher layer (e.g., RRC) signaling, and DRX ON/OFF is controlled by DRX commands from the MAC layer. Once DRX is configured, the UE may discontinuously perform PDCCH monitoring as shown in FIG. 7.

The following table describes a DRX operation of a UE. Referring to the following table, DRX configuration information is received by higher-layer signaling (e.g., RRC signaling), and DRX ON/OFF is controlled by a DRX command from the MAC layer. Once DRX is configured, the UE may perform PDCCH monitoring discontinuously, as illustrated in FIG. 7.

**Table 4**

| | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.
- Value of drx-onDurationTimer: configures the duration at the beginning of a DRX cycle.
- Value of drx-SlotOffset: configures the delay before starting the drx-onDurationTimer.
- Value of drx-InactivityTimer: the duration after the PDCCH occasion in which a PDCCH indicates a new UL or DL transmission for the MAC entity.
- Value of drxRetransmissionTimerDL (per DL HARQ process except for the broadcast process): configures the maximum duration until a DL retransmission is received.
- Value of drxRetransmissionTimerUL (per UL HARQ process): configures the maximum duration until a grant for UL retransmission is received.
- Value of drx-HARQ-RTT-TimerDL (per DL HARQ process except for the broadcast process): configures the maximum duration from reception of initial DL transmission to reception of DL assignment for HARQ retransmission.
- Value of drx-HARQ-RTT-TimerUL (per UL HARQ process): configures the maximum duration from reception of a grant for initial UL transmission to reception of a grant for UL retransmission.
- drx-LongCycleStartOffset: configures the Long DRX cycle and drx-StartOffset which defines the subframe where the Long and Short DRX cycle starts.
- drx-ShortCycle (optional): configures the Short DRX cycle.
- drx-ShortCycleTimer (optional): configures the duration the UE shall follow the Short DRX cycle. For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. The active time here refers to a total duration during which the UE monitors the PDCCH. The active time may include the ON duration of a DRX cycle, the time when the UE performs continuous reception while the inactivity timer has not expired, and the time when the UE performs continuous reception while waiting for a retransmission opportunity. For example, when DRX is configured, the Active Time for serving Cells in a DRX group includes the time while i) drx-onDurationTimer or drx-InactivityTimer configured for the DRX group is running; or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

The UE may be configured with one or multiple DRX groups through RRC signaling from the BS. For example, if two DRX groups are configured, each serving cell is uniquely assigned to one of the two DRX groups. The DRX parameters: drx-onDurationTimer and drx-InactivityTimer are configured separately for each DRX group. The DRX parameters: drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL are common to the DRX groups. Since each serving cell belongs to only one of the DRX groups, and the DRX parameters drx-onDurationTimer and drx-InactivityTimer are configured for each DRX group, while the other DRX parameters are common to the DRX groups, it may be considered that the serving cell is associated with only one set of DRX parameters.

FIG. 8 illustrates a case in which a long DRX cycle and a short DRX cycle are configured. Specifically, FIG. 8 shows a case in which *drx-ShortCycleTimer* is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. The same *onDurationTimer* value may be configured for the long DRX cycle and the short DRX cycle. If there is no data activity (e.g., no PDCCH is received) during the ON duration of the long DRX cycle, the UE follows the long DRX cycle as if the short DRX cycle were not configured. If there is data activity during the on-duration of the long DRX cycle, for example, while *drx-onDurationTimer* is running, the UE switches to the short DRX cycle and follows the short DRX cycle for a certain period of time (e.g., while *drx-ShortCycleTimer* is running). In this case, the start of the ON duration in the short DRX cycle is determined by *drx-StartOffset* and *drx-SlotOffset*, just like in the long DRX cycle. Referring to FIG. 8, if there is no data activity during the time that the UE follows the short DRX cycle, for example, if there is no data activity during the period defined by *drx-ShortCycleTimer* * drx-ShortCycle, the UE switches from short DRX cycles each having the duration by *drx-ShortCycleTimer* to the long DRX cycle.

### Network Energy Saving and Cell DRX/DTX

The energy saving of the BS is significantly considered in wireless communication systems, including 3GPP, due to its potential contribution to building eco-friendly networks through reduction of carbon emissions and curtailing operational expenditures (OPEX) for communication operators. In particular, as the demand for high transmission rates has escalated with the advent of 5G communications, BSs have been required to be equipped with a greater number of antennas and provide services in broader bandwidths and frequency bands. According to recent study, the energy cost of the BS has reached up to 20% of the total OPEX. Due to the increased interest in the energy saving of the BS, 3GPP NR release 18 has approved a new study item called "study on network energy savings." For example, to enhance energy-saving capabilities in terms of the transmission and reception of the BS, this study investigates how to achieve more efficient operations for transmission and/or reception in the time, frequency, space, and power domains dynamically and/or semi-statically with finer granularity of adaptation based on one or more network energy-saving techniques, using potential support/feedback from the UE and potential UE support information.

When the BS operates in network energy saving (NES) mode for energy saving (ES), it means that the BS has preconfigured a plurality of OFF periods (e.g., discontinuous transmission (DTX) periods of the BS) during which it turns off transmissions of a specific DL signal, and dynamically indicates one of these OFF periods to indicate that the DL signal is not transmitted during the predefined time period and thus reduce the power consumption of the BS and the UE. The NES mode may refer to an operation mode in which the power consumption of the BS and the UE is reduced by performing operations in the frequency domain, such as BWP switching and dynamic resource block (RB) adaptation, and operations in the spatial domain, such as semi-statically or dynamically turning off a specific BS reception antenna port to stop transmission and/or reception through it, as well as operations in the time domain.

As described above, when the UE is in connected mode after initial connection to the BS, it should continuously perform PDCCH monitoring to identify whether there is a scheduled transmission for it in each of its configured search spaces. However, when such scheduling doesn't happen all the time, the battery of the UE may drain quickly from performing unnecessary PDCCH monitoring every time. Accordingly, the BS may configure the UE with an ON period (ON duration) for PDCCH monitoring and an OFF period requiring no monitoring. That is, the BS may configure C-DRX for the UE to save the power of the UE. The C-DRX of the UE may also help the BS with power saving. For example, since the BS does not need to transmit a PDCCH to a specific UE during a C-DRX OFF period of the specific UE, the BS may use resources (e.g., radio resources within the C-DRX OFF period of the UE) for other purposes or achieve an ES gain from DTX/DRX. However, since the UE may perform transmissions in preconfigured resources (e.g., an SR, a PUCCH, a CG PUSCH, or the like) without restriction when needed, even during the OFF period, the BS should remain ready to receive these unexpected UL transmissions from the UE. Further, because C-DRX is configured UE-specifically, DRX cycles or ON/OFF periods are not aligned between UEs within a cell (or BS). Therefore, when the ON periods of UEs are configured in a time division multiplexing (TDM) manner, the BS may not sleep because it has to be awake to transmit a PDCCH in each ON period of the UEs within the cell (or the BS), which makes it difficult for the BS to expect an ES gain.

Accordingly, in some implementations of the present disclosure, the BS may save energy by turning off transmission/reception of a specific signal/channel during a non-active period through a cell(-specific) DTX/DRX configuration that repeats active and inactive periods, similar to UE C-DRX. A description is given below of some implementations of the present disclosure for a cell(-specific) DTX/DRX operation of a BS for saving energy of the BS through limited DTX/DRX, which entirely turns off transmissions/receptions on a cell or allows transmissions/receptions of specific signal(s)/channel(s) during a specific time period. Further, some implementations of the present disclosure for a UE operation during each time period when cell DTX/DRX is combined with a DRX operation of the UE in the cell are described. Although method(s) for combining cell DTX/DRX with a C-DRX operation of a UE and corresponding operation method(s) are mainly described for convenience, some implementations of the present disclosure may be similarly applied and extended not only to C-DRX but also to other DRX operations (e.g., idle mode DRX) of the UE.

The UE performs PDCCH monitoring during a periodic ON duration to identify any UL or DL transmissions/receptions to be performed. Upon receipt of a PDCCH, the UE performs a DL reception or a UL transmission according to an indication of the PDCCH. For UL, in the presence of data to be transmitted in a UL buffer, the UE may wake up and transmit a scheduling request (SR) regardless of C-DRX, even if the UE is in sleep mode. A UE in idle mode periodically performs paging monitoring. When the UE is not a target of the paging, it may re-enter the sleep mode and operate in the idle mode (idle mode DRX (i.e., I-DRX)). When it is said that the UE operates in the sleep mode, this may mean that the UE performs an SR transmission "regardless of an active time determined by C-DRX" or "even during periods other than the active time determined by C-DRX." In the C-DRX operation, a DRX cycle is a repeating time period including an ON duration and an OFF duration. The length of a DRX cycle may be defined from the start of an ON duration until just before the next one. DRX cycles may be categorized into a long DRX cycle and a short DRX cycle. When the DRX cycle length increases, latency may increase because when the BS has a PDSCH to be transmitted to the UE immediately after a specific ON duration of the UE ends, the BS should wait until the next ON duration of the UE. From the perspective of the BS, since the UE does not transmit periodic CSI (P-CSI) or a sounding reference signal (SRS) during the OFF period, the BS may allocate those resources (i.e., resources for the P-CSI or SRS transmission) to other UEs, thereby increasing resource utilization. The BS may also switch to power saving mode during the OFF period of the UE to save energy.

In relation to C-DRX, the BS may indicate the UE to immediately enter DRX sleep mode without operating in active mode until the end of the ON duration by a DRX command MAC control element (CE). For example, the BS may indicate the UE to end its current active time and immediately enter the DRX cycle. When the UE is configured only with the long DRX cycle, it may operate in the long DRX cycle (based on the DRX command MAC CE). When both long and short DRX cycles are configured for the UE, the UE immediately enters the short DRX cycle after receiving the DRX command MAC CE. Further, when the BS provides a long DRX command MAC CE, the UE may operate in the long DRX cycle even if the short DRX cycle is configured. The BS may also adjust/change the start point of the long DRX cycle by an RRC parameter *drx-LongCycleStartOffset* used to configure the long DRX cycle and *drx-SlotOffset* that defines a subframe where the long and short DRX cycles start. The value of the RRC parameter *drx-LongCycleStartOffset* is defined in ms, so that the long DRX cycle may start at a slot boundary. Additionally, another RRC parameter *drx-SlotOffset* may be used to configure the start point of an ON duration with a slot-level granularity. In this case, it is defined as a relative position of the ON duration by applying a slot offset indicated (by *drx-SlotOffset*) to a reference point indicated by *drx-LongCycleStartOffset*. Although the BS may use alignment between the ON durations and OFF durations of a plurality of UEs within a cell, for ES by adjusting the start point of a DRX cycle and the start point of an ON duration, a more dynamic offset value indication may be required for ES based on a dynamic transmission/reception OFF time pattern of the BS.

The UE may save energy by waking up only during the ON duration to monitor a PDCCH transmitted to it according to a C-DRX configuration, compared to continuously monitoring a PDCCH (e.g., in every slot). Further, when the BS has no data to transmit to the UE during an upcoming ON duration of the UE, the BS may save even more of the battery of the UE by transmitting a wake-up signal (WUS) and thus indicating no need to wake up in the ON duration (i.e., no need to start an onDurationTimer), before the ON duration of the UE starts. In this context, when the BS has no data to transmit/receive to/from a UE with a C-DRX configuration during an upcoming ON duration of the UE, the BS may indicate to the UE that the UE does not need to wake up in this On duration by transmitting a WUS transmittable in DCI format 2_6, which is used to notify one or more UEs of power saving information outside the DRX active time, in a WUS occasion configured before the ON duration. When receiving the WUS (e.g., a wake-up indication via DCI format 2_6), the UE may continue to remain in the sleep state without transitioning to the active mode, thereby saving more energy.

In the following description, UE DRX, or C-DRX and I-DRX refers to discontinuous reception from the perspective of the UE. Cell DRX refers to discontinuous reception from perspective of the BS, while cell DTX refers to discontinuous transmission from the perspective of the BS. From the perspective of the UE, cell DRX may mean turning off UL transmission, and cell DTX may mean turning off DL reception.

According to the cell DTX/DRX operation, similar to the structure of C-DRX of the UE, an active period in which all signals and channels may be transmitted/received without restriction, and a non-active period (a period outside the active period) in which transmissions/receptions of all signals and channels are turned off or only specific signals and channels are restrictively transmitted/received (e.g., only transmissions/receptions of channels/signals such as PDCCH transmissions or RACH/SR PUCCH receptions are allowed), may be configured. A cell DTX/DRX configuration may be configured and activated only by the RRC (i.e., only through RRC signaling), or some parameters for cell DTX/DRX may be configured by the RRC while the remaining parameters are configured/indicated and activated by L1 and/or L2 signaling (e.g., (group-common) DCI and/or a MAC CE). Information about the positions and durations (in the time domain) of the active period and the non-active period of cell DTX/DRX may be preconfigured through specific RRC parameters. For example, the start point of the active period may be set through an offset from a specific subframe boundary or a specific system frame number (SFN) value, and the duration may be set through a duration-related parameter or a timer. In some implementations, the BS may preconfigure a plurality of parameter or timer candidates and indicate one of the candidates upon activation through L1 and/or L2 signaling. In the cell DTX/DRX active period, transmissions/receptions of all signals and channels may be possible without special restrictions, as in a normal operation of the BS. A time period outside the active period is basically considered a non-active period in which transmissions/receptions except for preconfigured signal(s) and channel(s) are restricted, and the BS may achieve an ES gain through an operation of performing only such minimal transmission/reception. Accordingly, an operation performed when an NES state/mode is on may be considered for the time period outside the active period.

For example, to reduce an active time for DL transmission/UL reception of the BS, the UE may be configured with a periodic cell DTX/DRX pattern (i.e., active and non-active periods). The cell DTX/DRX pattern may be common to all UEs within the cell. Each serving cell may be configured with a periodic cell DTX pattern by RRC. The BS may configure only cell DTX, only cell DRX, or both for a cell. Cell DTX and cell DRX patterns may be configured and activated separately. A maximum of N cell DTX/DRX patterns per MAC entity may be configured for different serving cells, where N is a predefined value. Cell DTX/DRX may be activated/deactivated by RRC signaling or L1 group common signaling (e.g., signaling via a group-common PDCCH). The BS may control cell DTX and cell DRX operations by providing a cell DTX/DRX configuration through RRC signaling. For example, through the cell DTX/DRX configuration, the BS may provide RRC parameters for a timer (e.g., a cell DTX/DRX ON duration timer) related to an active period at the start of a cell DTX/DRX cycle, a subframe where the cycle starts, a delay before the active period starts, and a cell DTX/DRX cycle period (i.e., a cell DTX/DRX periodicity). An active period in cell DTX/DRX may be a period during which the UE waits to receive PDCCHs or SPS occasions and to transmit an SR or a CG. The cell DTX/DRX cycle specifies a periodic repetition of an active period followed by an inactive period. The active period and cycle parameters may be common between cell DTX and cell DRX. The BS may configure C-DRX and cell DTX/DRX to have at least a partial overlap between a C-DRX ON period of the UE and a cell DTX/DRX active period. For instance, the BS may configure a C-DRX periodicity of the UE to be an integer multiple of a cell DTX/DRX periodicity, or vice versa.

In some implementations, a cell DTX operation may affect the monitoring activity of the UE for PDCCHs and configured DL assignments in RRC_CONNECTED. For a serving cell for which cell DTX is configured and activated, the UE (e.g., a MAC entity of the UE) monitors a PDCCH on the serving cell, when the serving cell is in the cell DTX active period. The cell DTX active period of the serving cell may include a time period during which a cell DTX/DRX ON duration timer is running for the serving cell. For example, for the serving cell for which cell DTX is configured and activated, when the serving cell is not in the cell DTX active period, the UE (e.g., the MAC entity of the UE) may not monitor a PDCCH on the serving cell, and may not receive a transport block (i.e., not perform an SPS PDSCH reception) on the serving cell according to a configured DL assignment for SPS, regardless of whether the UE is in a UE C-DRX active period.

In some implementations, a cell DRX operation may control an SR and configured UL grant transmission activity of the UE in RRC_CONNECTED. In some scenarios, when cell DRX is configured and activated for a serving cell, the UE (e.g., the MAC entity of the UE) may, in principle, perform, on the serving cell, a CG PUSCH transmission and a PUCCH transmission (if the serving cell is a PUCCH cell) only in the cell DRX active period. For example, when the serving cell with configured and activated cell DRX is within the cell DRX non-active period, the UE (e.g., the MAC entity of the UE) does not transmit an SR in a PUCCH resource for SR (even if the serving cell is a PUCCH cell), does not report periodic CSI on a PUCCH (even if the serving cell is a PUCCH cell), and does not report semi-persistent CSI configured on a PUSCH of the serving cell. In other words, when cell DRX is configured and activated for a serving cell, the UE may not perform a transmission in CG resources of the serving cell or may not transmit an SR on the serving cell, during the DRX non-active period.

A DCI format (e.g., DCI format 2_9) may be used to activate or deactivate cell DTX and/or DRX configurations of one or more serving cells for one or more UEs. For example, the following information may be transmitted in DCI format 2_9 with a CRC scrambled with a cellDTRX-RNTI: block number 1, block number 2, ..., block number N, where the starting position of a block associated with a serving cell is determined by a parameter positionInDCI-cellDTRX provided to a UE by higher layer signaling. When the UE is configured to monitor DCI format 2_9 with a CRC scrambled with the cellDTRX-RNTI, one or more blocks having cell DTX/DRX indication fields defined on a block basis may be configured for the UE through higher layer signaling. A UE configured with one or both of a cell DTX operation and a cell DRX operation by an RRC configuration *cellDTXDRX-Config* for a serving cell to operate on the serving cell may be provided with a configuration for a (common) search space for monitoring a PDCCH to detect DCI format 2_9 during an active time and a configuration for the position of a cell DTX/DRX indication field for the serving cell within DCI format 2_9. When the UE is configured with both the cell DTX operation and the cell DRX operation for the serving cell and provided with an RRC parameter *cellDTXDRX-L1activation* indicating whether the serving cell enables L1 signaling based on DCI format 2_9 to dynamically activate/deactivate the cell DTX/DRX configuration, the cell DTX/DRX indication field may include two bits, where a first bit indicates the cell DTX operation and a second bit indicates the cell DRX operation. When the UE is configured with only one of the cell DTX operation and the cell DRX operation for the serving cell and provided with the RRC parameter *cellDTXDRX-L1activation*, the cell DTX/DRX indication field may include one bit indicating one of the cell DTX operation and the cell DRX operation for the serving cell. A value of '0' for the bit of the cell DTX/DRX indication field indicates deactivation of cell DTX or cell DRX, and a value of '0' for the bit of the cell DTX/DRX indication field indicates activation of cell DTX or cell DRX. When the UE receives a PDCCH providing DCI format 2_9 indicating a change in activation or deactivation of a current cell DTX operation or cell DRX operation for a second serving cell in slot m in an active DL BWP of a first serving cell, the UE operates on the second serving cell according to the indicated cell DTX operation or cell DRX operation starting from a slot in an active DL BWP or active UL BWP of the second serving cell, respectively, that is not before the beginning of slot m+d in the active DL BWP of the first serving cell, where d is the number of slots for the SCS of the active DL BWP of the first serving cell in the following table.

**Table 5**

| SCS (kHz) | Number of slots |
|---|---|
| 15 | 3 |
| 30 | 6 |
| 60 | 12 |
| 120 | 24 |
| 480 | 96 |
| 960 | 192 |

When CA is configured, an activation/deactivation mechanism for cell(s) may be supported to reduce unnecessary energy consumption of a BS and/or a UE. For example, when the UE is configured with one or more SCells, the BS may activate or deactivate the configured SCell(s). When an SCell is configured, the SCell is considered deactivated unless an RRC parameter *sCellState* indicating a cell state is set to 'activated' in the configuration for the SCell. The SCell configured for the UE may be activated and deactivated by an SCell activation/deactivation MAC control element (CE) provided to the UE by the BS, by an SCell deactivation timer configured for the SCell, by the RRC parameter *sCellState* for the SCell, or by the state of an SCG. For each configured SCell, when the SCell is configured with the parameter *sCellState* set to 'activated' or an SCell activation/deactivation MAC CE activating the SCell is received, the UE activates the SCell. When the SCell is active, the UE may perform normal SCell operations including: SRS transmission on the SCell, CSI reporting for the SCell, PDCCH monitoring on the SCell (when the UE is configured to monitor a PDCCH on the SCell), and PUCCH transmission on the SCell (when the SCell is a cell with a configured PUCCH). When an SCell activation/deactivation MAC CE deactivating the SCell is received, an SCell deactivation timer associated with the activated SCell expires, or an SCG associated with the activated SCell is deactivated, the UE deactivates the SCell, stops the SCell deactivation timer associated with the SCell, clears any configured DL assignments and any configured UL grant Type 2 associated with the SCell, suspends any configured UL grant Type 1 associated with the SCell, and flushes all HARQ buffers associated with the SCell. When a PDCCH on the activated SCell indicates a UL grant or a DL assignment, or when a PDCCH on a serving cell scheduling the activated SCell indicates a UL grant or a DL assignment for the activated SCell, or when a MAC PDU is transmitted in a configured grant, or when a MAC PDU is received in a configured DL assignment, the UE restarts the SCell deactivation timer associated with the SCell. When the SCell is deactivated, the UE does not transmit an SRS on the SCell, does not report CSI for the SCell, does not transmit on a UL-SCH on the SCell (e.g., does not perform PUSCH transmission on the SCell), does not transmit on an RACH on the SCell (e.g., does not perform PRACH transmission on the SCell), does not perform PDCCH monitoring on the SCell, and does not perform PUCCH transmission on the SCell.

While a cell DTX/DRX configuration may be configured by a UE-specific RRC configuration and activated/deactivated by RRC signaling as described above, it may also be activated/deactivated more quickly and dynamically by group-common DCI (e.g., DCI format 2_9). When cell DTX/DRX is configured for a serving cell and the serving cell is activated or deactivated, a question arises as to what happens to a cell DTX/DRX operation for the serving cell. When the cell DTX/DRX configuration for the serving cell is also deactivated along with the deactivation of the serving cell, processing of the cell DTX/DRX configuration when the serving cell is reactivated also becomes an issue.

A description will be given below of some implementations of the present disclosure for a cell DTX/DRX configuration and operation according to cell activation/deactivation, when a BS and/or a UE intends to perform a cell DTX/DRX operation in a periodically repeating ON/OFF period pattern for energy saving.

**<Method #1> Method for operating a UE to exceptionally perform monitoring (and acquisition/application of cell DTX information) for DCI indicating cell DTX/DRX activation/deactivation related to a specific SCell even when the SCell is MAC-deactivated (or method for preconfiguring/indicating, for a deactivated SCell, whether a UE is to monitor DCI indicating cell DTX/DRX activation/deactivation related to the SCell) (and acquire/apply cell DTX information).**

The BS may configure an SCell for a UE having a CA capability and activate it through a MAC activation command, thereby using the SCell for capacity boosting purposes, such as obtaining a higher data transmission rate. When the SCell is activated, the UE may use the activated SCell for PDCCH monitoring, PDSCH reception, SRS transmission, CQI reporting, PUSCH transmission, and the like. However, when there is no data activity in the SCell for a specific time period, SCell deactivation may be indicated by a MAC command or RRC signaling to save unnecessary energy.

A cell DTX/DRX configuration may be configured and operated on a cell-by-cell basis or a cell group-by-cell group basis. For each serving cell configured for the UE, only cell DTX may be configured and operated, only cell DRX may be configured and operated, or both cell DTX and DRX may be configured and operated independently. While the cell DTX/DRX configuration may be configured by UE-specific RRC signaling and activated/deactivated only by RRC signaling, it may also be activated/deactivated more quickly and dynamically by group-common DCI (e.g., DCI format 2_9). In addition to the cell DTX/DRX configuration, the UE may be configured with a common search space (CSS) for monitoring DCI format 2_9, and configured with the position of an information block corresponding to its serving cell among a plurality of information blocks included in DCI format 2_9 as a starting bit position. In the case of a cell configured with only cell DTX or only cell DRX, (de)activation is indicated by 1 bit, and in the case of a cell configured with both cell DTX and cell DRX, (de)activation of each of the cell DTX and cell DRX may be indicated by 2 bits.

When a specific SCell configured for the UE is configured with cell DTX, cell DRX, or both, and is configured for monitoring DCI format 2_9, the UE may identify whether (de)activation is indicated by reading the starting bit position of an information block corresponding to the SCell among the bits of the DCI. However, when the SCell is deactivated through a MAC command, the UE may also stop monitoring DCI format 2_9 for a cell DTX/DRX (de)activation indication.

However, in some implementations of the present disclosure, for a SCell deactivated through a MAC CE (or *sCellDeactivationTimer*), it may be exceptionally configured/instructed to continue monitoring DCI for a cell DTX/DRX (de)activation indication. In this case, when the BS has instructed cell DTX/DRX activation or deactivation for the currently deactivated SCell, the UE may immediately apply the cell DTX/DRX configuration when the SCell is reactivated, allowing the transmission/reception operations of the UE and the BS to be aligned without ambiguity. When it is preconfigured and/or agreed (in the standards) that transmission/reception of a specific DL or UL signal/channel is not performed during a cell DTX/DRX non-active period by the cell DTX or cell DRX configuration, for example, when SRS transmission/reception is in an OFF state due to a non-active period of an activated cell DRX configuration immediately after the SCell is activated, the UE may identify the non-active period of cell DRX immediately after the SCell is activated through cell DTX/DRX (de)activation DCI received in the deactivated state of the SCell, and not perform SRS transmission. Therefore, the cell DRX operation may be aligned between the BS and the UE, and unnecessary energy consumption may be avoided.

**<Method #2> Method for stopping monitoring for DCI indicating cell DTX/DRX activation/deactivation without exception when an SCell is deactivated, but defining/configuring a default cell DTX/DRX operation (e.g., activation or deactivation) to be applied when the SCell is reactivated.**

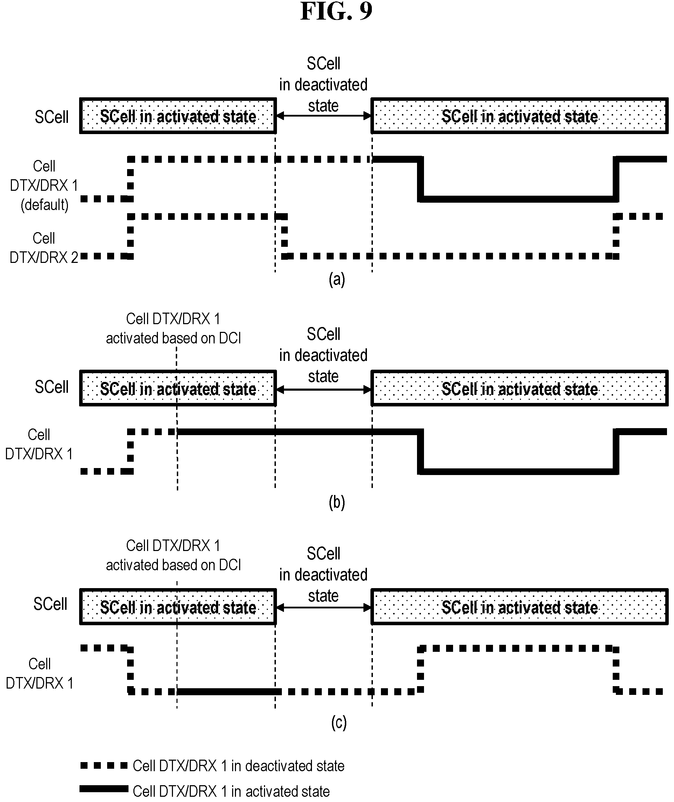

FIG. 9 illustrates examples of applying a cell DTX/DRX configuration to an SCell that is deactivated and then activated again according to some implementations of the present disclosure. In the cell DTX/DRX patterns of FIG. 9, a dotted line indicates a cell DTX/DRX configuration in a deactivated state, and a solid line indicates a cell DTX/DRX configuration in an activated state.

After the UE receives DCI (e.g., DCI format 2_9) indicating cell DTX/DRX activation/deactivation, a certain amount of time may be required to actually apply it, similar to other DCI formats (e.g., DCI format 2_6). For example, when the UE receives DCI format 2_9 in slot n, it may not apply a preconfigured cell DTX/DRX active/non-active pattern in slot n or the immediately following slot n+1. Rather, a delay as illustrated in Table 5 including a processing time is required to apply the cell DTX/DRX configuration according to the SCS of a PDCCH carrying DCI format 2_9.

The UE may apply an actual cell DTX or DRX activation/deactivation transition (i.e., transition from the activated state to the deactivated state, or vice versa) starting from the beginning of slot X, where slot X is the first slot that is not earlier than (i.e., identical to or immediately after) n+D, calculated by adding the delay value illustrated in Table 5 based on slot n in which DCI format 2_9 is received.

As such, when cell DTX/DRX activation/deactivation is indicated by DCI format 2_9 after an SCell is deactivated through a MAC CE (or based on *sCellDeactivationTimer*) and then reactivated, it may take a long time until an actual cell DTX/DRX configuration is applied. Therefore, it may be considered that when the SCell is deactivated, the UE stops monitoring DCI indicating cell DTX/DRX activation/deactivation without exception, and a default cell DTX/DRX operation (e.g., activation or deactivation) to be applied when the SCell is reactivated is defined/configured. That is, a cell DTX/DRX operation to be applied by default without separate DCI indicating cell DTX/DRX activation/deactivation when the SCell is activated may be preconfigured/defined.

In some implementations, when multiple cell DTX/DRX configurations are configurable (e.g., when N cell DTX/DRX configurations are provided), one of the following (e.g., one of (N+1) states) as a cell DTX/DRX configuration to be activated together when the SCell is activated may be configured for/indicated to the UE.
- Cell DTX/DRX deactivation
- Activation of cell DTX/DRX configuration 1
- Activation of cell DTX/DRX configuration 2
- ...
- Activation of cell DTX/DRX configuration N

As described above, one of the (N+1) states may be configured for/indicated to the UE by DCI format 2_9, an SCell activation MAC CE, or RRC signaling. Alternatively, in a state where one of the (N+1) states is configured/defined as a default cell DTX/DRX configuration (state), the UE (and/or the BS) may operate by immediately applying the default cell DTX/DRX configuration (state) the moment the SCell is activated through a MAC command (e.g., a MAC CE including an activation indication for the SCell) or RRC signaling unless there is a separate BS configuration/indication, and may follow the configuration/instruction if there is the separate BS configuration/indication. When activation of cell DTX/DRX configuration 1 is configured/indicated as the default cell DTX/DRX configuration (state), cell DTX/DRX configuration 1 may be activated and applied to the SCell the moment the deactivated SCell is activated through a MAC CE, as illustrated in FIG. 9(a). Alternatively, in some implementations, even if there is a default cell DTX/DRX configuration, when the BS transmits an activation indication for the SCell, it may simultaneously indicate a cell DTX/DRX configuration to be activated for the SCell. For example, when the BS configures/indicates activation of cell DTX/DRX configuration 2 while indicating SCell activation, cell DTX/DRX configuration 2 may be activated according to the configuration/indication of the BS, instead of the default cell DTX/DRX configuration 1.

In another method, in some implementations, when multiple cell DTX/DRX configurations exist and one of them is configured/defined as the default cell DTX/DRX configuration, activation or deactivation of the default cell DTX/DRX configuration is configured/indicated by a MAC CE or RRC signaling indicating activation of the SCell. When the SCell is activated, the default cell DTX/DRX configuration may be activated and applied to the SCell. In some implementations, in addition to an indication to activate/deactivate a cell DTX/DRX configuration through a MAC CE, activation/deactivation of the cell DTX/DRX configuration may also be indicated by DCI that schedules the MAC CE. In this case, a separate ID such as an RNTI may be required for the DCI to indicate the cell DTX/DRX configuration activation/deactivation.

Alternatively, in some implementations, it may be configured/defined whether a cell DTX/DRX activation or deactivation state previously indicated by DCI format 2_9 is maintained or initialized when the SCell is reactivated after being deactivated. For example, in the case where cell DTX/DRX configuration 1 for the SCell is activated through DCI format 2_9 and then the SCell is deactivated (due to a cause other than DCI format 2_9, such as a MAC CE indicating deactivation of the SCell, expiration of a SCell deactivation timer, or deactivation of a corresponding SCG), when the SCell is reactivated through a MAC CE or RRC signaling, the activated state of cell DTX/DRX configuration 1 indicated by DCI format 2_9 in the previous activated state of the SCell may be maintained as is, as illustrated in FIG. 9(b), or an activation or deactivation indication related to the cell DTX/DRX configuration received in the previous activated state of the SCell may be initialized the moment the SCell is deactivated, the default state for the cell DTX/DRX configuration is maintained when the SCell may be reactivated, and then the cell DTX/DRX configuration may be applied according to a new activation or deactivation indication for the cell DTX/DRX configuration of the SCell through DCI format 2_9. For example, referring to FIG. 9(c), in the case where the initial state (i.e., default state) of cell DTX/DRX configuration 1 is set to the deactivated state by the BS and cell DTX/DRX configuration 1 is activated by an activation indication in a DCI format in the activated state of the SCell, once the SCell is deactivated, the activation indication may be initialized, and the deactivated state (the initial state of cell DTX/DRX configuration 1) may be maintained until the SCell is reactivated and a new activation indication for cell DTX/DRX configuration 1 is received. The default state of the cell DTX/DRX configuration may be predefined or configured and signify activation or deactivation of the cell DTX/DRX configuration. In some implementations, whether the activation or deactivation indication for the cell DTX/DRX configuration received in the previous activated state of the SCell is maintained or initialized when the SCell is reactivated after being deactivated may be configured/indicated through an SCell deactivation MAC CE or RRC signaling.

According to Method #2, even if DCI format 2_9 for the activation of the cell DTX/DRX configuration for the SCell is not provided to the UE, the cell DTX/DRX configuration may be activated when the SCell is activated. Accordingly, the BS and the UE may save network energy by immediately applying the active/non-active periods of the cell DTX/DRX configuration to the SCell even if the SCell is activated.

**<Method #3> Method for configuring/indicating to a UE configured and operating with C-DRX whether to monitor DCI indicating cell DTX/DRX activation/deactivation during a time period other than an active time.**

A connected mode UE may save energy by monitoring a PDCCH only during an ON duration through a C-DRX configuration. Therefore, since DCI format 2_9, which indicates (de)activation of a cell DTX/DRX reconfiguration, may also only be monitored during the ON duration (or active time) of the C-DRX of the UE, when a time for cell DTX/DRX activation or deactivation which the BS intends to indicate is not during the ON duration (or active time) of the UE C-DRX, the BS may wait until the ON duration (or active time) of the next UE DRX cycle to perform the DCI indication.

To indicate cell DTX/DRX (de)activation more instantaneously (immediately when needed) to a UE configured with C-DRX, the BS may configure/indicate whether to monitor DCI indicating cell DTX/DRX (de)activation even during a time period outside a C-DRX active time. To save the energy of the UE, the BS may configure the UE to monitor the DCI indicating cell DTX/DRX (de)activation only during the C-DRX active time as before, or may configure the UE to monitor the DCI indicating cell DTX/DRX (de)activation even outside the active time to activate or deactivate a cell DTX/DRX configuration at any time.

**<Method #4> Method for determining a slot boundary to start an actual cell DTX/DRX pattern when BWP switching occurs (by DCI or a timer) during an application delay after a UE receives an indication for cell DTX/DRX activation or deactivation for a specific cell through DCI format 2_9 in a specific serving cell, resulting in a change in an SCS.**

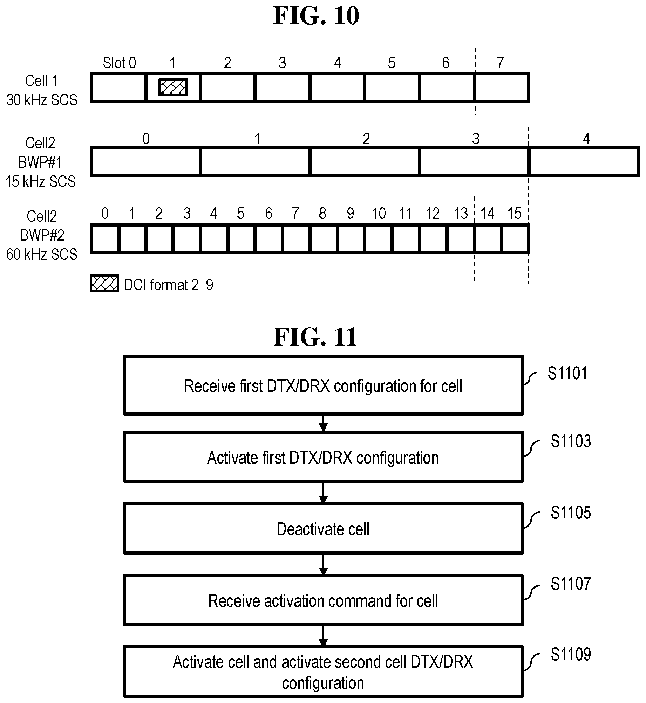

FIG. 10 is a diagram illustrating some implementations of the present disclosure for the start of a cell DTX/DRX pattern during BWP switching.

In some implementations, even if a UE is configured with a plurality of serving cells, the UE may receive DCI format 2_9 in only one specific serving cell. The UE applies an actual cell DTX/DRX pattern (i.e., active/non-active periods) at the first slot boundary identical to or later than slot n+D, considering a D value for each SCS illustrated in Table 5 based on the PDCCH SCS of slot n where DCI format 2_9 is received as an application delay. However, when BWP switching occurs (due to DCI or expiration of a timer such as bwp-InactivityTimer) between a reception time of DCI format 2_9 indicating cell DTX/DRX activation or deactivation of specific cell(s) and a time n+D resulting from applying the application delay, it is necessary to define which BWP's SCS will be a basis for determining a slot boundary (where the cell DTX/DRX pattern will be applied).

For example, referring to FIG. 10, when the UE receives DCI format 2_9 in slot 1 of Cell 1, the first slot boundary identical to or later than slot n+D is slot 7, considering an application delay according to Table 5, and slot boundaries considering the SCS of each BWP in Cell 2 are slot 4 and slot 14 for BWP#1 and BWP#2, respectively. However, when the BWP of Cell 2 is switched from BWP#1 to BWP#2 (due to DCI or expiration of a timer such as bwp-InactivityTimer) after the UE receives DCI in slot 1 of Cell 1, the SCS changes from 15kHz to 60kHz. Thus, while the application of an actual cell DTX/DRX pattern starts in slot 4 based on the 15kHz SCS when the UE receives the DCI, the cell DTX/DRX pattern starts to be applied in slot 14 based on the 60kHz SCS after BWP switching. Therefore, the slot boundary to start the actual cell DTX/DRX pattern may vary depending on which BWP's SCS is used as the basis. Accordingly, in such a case, the following methods may be considered for a cell for which activation/deactivation of cell DTX/DRX is indicated by DCI format 2_9.
(1) A method for determining the start slot boundary of an actual cell DTX/DRX pattern by calculating an application delay n+D (i.e., slot n+D considering an application delay D) based on a BWP SCS at a reception time of DCI indicating cell DTX/DRX activation/deactivation.
(2) A method for determining the start slot boundary of an actual cell DTX/DRX pattern based on a BWP SCS at a time n+D, calculated by applying an application delay after receiving DCI indicating cell DTX/DRX activation/deactivation.
(3) A method for determining a slot boundary to apply an actual cell DTX/DRX pattern based on the smaller SCS between a BWP SCS at a reception time of DCI indicating cell DTX/DRX activation/deactivation and a BWP SCS at a time n+D calculated by applying an application delay D, if they are different.
(4) (When a BWP SCS at a reception time of DCI indicating cell DTX/DRX activation/deactivation and a BWP SCS at a time n+D calculated by applying an application delay are different), a method for determining a slot boundary to apply an actual cell DTX/DRX pattern based on the smallest of the SCSs of all BWPs of cell(s) for which cell DTX/DRX activation/deactivation is indicated.
(5) (When a BWP SCS at a reception time of DCI indicating cell DTX/DRX activation/deactivation and a BWP SCS at a time n+D calculated by applying an application delay are different), a method for determining a slot boundary to apply an actual cell DTX/DRX pattern based on the SCS of a specific (reference) BWP (preconfigured by the BS or defined in the standards) among the BWPs of a cell for which cell DTX/DRX activation/deactivation is indicated.

While the above methods (1) to (5) are described from the perspective of a cell for which cell DTX/DRX activation/deactivation is indicated, they are all applicable to a cell that indicates the cell DTX/DRX activation/deactivation (i.e., a cell carrying DCI format 2_9).

In the present disclosure, '/' in expressions such as activation/deactivation may mean 'and/or'. For example, activation/deactivation means activation and/or deactivation.

In Method #4, when cell DTX/DRX activation or deactivation is indicated by DCI format 2_9, a cell (i.e., scheduling cell) in which DCI format 2_9 is received and a cell (i.e., scheduled cell) for which cell DTX/DRX activation or deactivation is indicated are different, and BWP#1 at the time when the cell DTX/DRX activation or deactivation indication is received and BWP#2 after an application delay defined in Table 5 are different and the SCSs of BWP#1 and BWP#2 are different due to occurrence of BWP switching in the scheduled cell immediately after (or immediately before) the UE receives DCI format 2_9, it may be unclear whether to use the SCS of BWP#1 or BWP#2 as a basis for calculating an actual application delay in the scheduled cell. In this case, the UE may expect the following operations in some implementations of the present disclosure.
(1) The UE does not expect the BWP switching indication through DCI during a time period in which the application delay is applied after receiving the cell DTX/DRX activation or deactivation indication through DCI format 2_9. Alternatively, the UE holds the bwp-InactivityTimer to prevent BWP switching from being triggered by the timer.
(2) When the UE receives the BWP switching indication through DCI (or when BWP switching is triggered by a timer such as bwp-InactivityTimer) during a time period in which the application delay is applied after receiving the cell DTX/DRX activation or deactivation indication through DCI format 2_9, the UE does not expect SCSs before and after the BWP switching to be different.

Method #1, Method #2, Method #3, and Method #4 described above may be applied independently or in combination. For example, Method #1 or Method #2 may be applied together with Method #3. In another example, Method #1 or Method #2 may be applied together with Method #4. In yet another example, Method #1 or Method #2 may be applied together with both Method #3 and Method #4.

FIG. 11 is a flowchart illustrating a UE operation according to some implementations of the present disclosure.

The UE may perform operations according to some implementations of the present disclosure. The UE may include at least one transceiver; at least one processor; and at least one computer memory operably connectable to the at least one processor and storing instructions that, when executed, cause the at least one processor to perform operations according to some implementations of the present disclosure. A processing device for a UE may include at least one processor; and at least one computer memory operably connectable to the at least one processor and storing instructions that, when executed, cause the at least one processor to perform operations according to some implementations of the present disclosure. A computer readable (non-transitory or non-volatile) storage medium may store at least one computer program including instructions that, when executed by at least one processor, cause the at least one processor to perform operations according to some implementations of the present disclosure. A computer program or a computer program product may include instructions recorded in at least one computer readable (non-transitory or non-volatile) storage medium and causing, when executed, (at least one processor) to perform operations according to some implementations of the present disclosure.

The method performed by the UE or the operations in the UE, the processing device, the (non-transitory) computer-readable storage medium, and/or the computer program product may include receiving a first cell DTX/DRX configuration for a serving cell (S1101); activating the first DTX/DRX configuration (S1103); deactivating the serving cell for which the first DTX/DRX configuration is activated (S1105); receiving an activation command for the deactivated serving cell (S1107); and based on the activation command, i) activating the serving cell, and ii) activating a second cell DTX/DRX configuration for the serving cell (S1109).

In some implementations, the method or the operations may further include receiving information about a default cell DTX/DRX configuration for the serving cell through RRC signaling.

In some implementations, the activation command may include information about a default cell DTX/DRX configuration for the serving cell.

In some implementations, the method or the operations may further include receiving information about a default cell DTX/DRX configuration for the serving cell through DCI scheduling the activation command.

In some implementations, the method or the operations may further include receiving an RRC configuration including a plurality of DTX/DRX configurations for the serving cell; and obtaining information about a default cell DTX/DRX configuration among the plurality of DTX/DRX configurations.

In some implementations, the second cell DTX/DRX configuration may be the default cell DTX/DRX configuration.

In some implementations, the method or the operations may further include receiving information related to maintaining a cell DTX/DRX activation indication for the serving cell. Based on the information related to maintaining the cell DTX/DRX activation indication being a first value, the first cell DTX/DRX configuration may be used as the second cell DTX/DRX configuration.

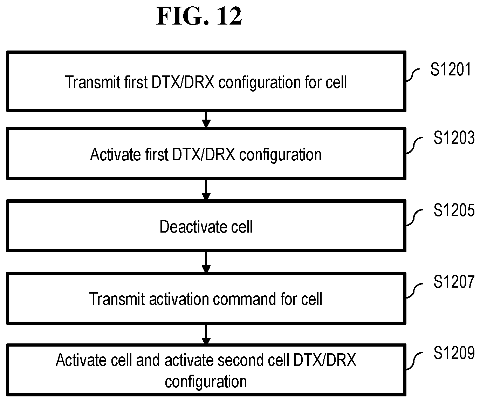

FIG. 12 is a flowchart illustrating a BS operation according to some implementations of the present disclosure.

A BS may perform operations according to some implementations of the present disclosure. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A (non-transitory or non-volatile) computer-readable storage medium may store at least one computer program including instructions that, when executed by at least one processor, cause the at least one processor to perform operations according to some implementations of the present disclosure. A computer program or a computer program product may include instructions recorded in at least one (non-transitory or non-volatile) computer-readable storage medium and causing, when executed, (at least one processor) to perform operations according to some implementations of the present disclosure.

The method performed by the BS or the operations in the BS< the processing device, the (non-transitory) computer-readable storage medium, and/or the computer program product may include transmitting a first cell DTX/DRX configuration for a serving cell (S1201); activating the first DTX/DRX configuration (S1203); deactivating the serving cell for which the first DTX/DRX configuration is activated (S1205); transmitting an activation command for the deactivated serving cell (S1207); and based on the activation command, i) activating the serving cell, and ii) activating a second cell DTX/DRX configuration for the serving cell (S1209).

In some implementations, the method or the operations may further include transmitting information about a default cell DTX/DRX configuration for the serving cell through RRC signaling.

In some implementations, the activation command may include information about a default cell DTX/DRX configuration for the serving cell.

In some implementations, the method or the operations may further include transmitting information about a default cell DTX/DRX configuration for the serving cell through DCI scheduling the activation command.

In some implementations, the method or the operations may further include transmitting an RRC configuration including a plurality of DTX/DRX configurations for the serving cell; and transmitting information about a default cell DTX/DRX configuration among the plurality of DTX/DRX configurations.

In some implementations, the second cell DTX/DRX configuration may be the default cell DTX/DRX configuration.

In some implementations, the method or the operations may further include transmitting information related to maintaining a cell DTX/DRX activation indication for the serving cell. Based on the information related to maintaining the cell DTX/DRX activation indication being a first value, the first cell DTX/DRX configuration may be used as the second cell DTX/DRX configuration.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

The implementations of the present disclosure may be used in a BS, a UE, or other equipment in a wireless communication system.

## Claims

1. A method performed by a user equipment (UE), comprising:
receiving a first cell discontinuous transmission (DTX)/discontinuous reception (DRX) configuration for a serving cell;
activating the first DTX/DRX configuration;
deactivating the serving cell for which the first DTX/DRX configuration is activated;
receiving an activation command for the deactivated serving cell; and
based on the activation command, i) activating the serving cell, and ii) activating a second cell DTX/DRX configuration for the serving cell.

2. The method of claim 1, further comprising:
receiving information regarding a default cell DTX/DRX configuration for the serving cell through radio resource control (RRC) signaling,
wherein the second cell DTX/DRX configuration is the default cell DTX/DRX configuration.

3. The method of claim 1, wherein the activation command includes information regarding a default cell DTX/DRX configuration for the serving cell, and
wherein the second cell DTX/DRX configuration is the default cell DTX/DRX configuration.

4. The method of claim 1, further comprising:
receiving information regarding a default cell DTX/DRX configuration for the serving cell through downlink control information that schedules the activation command,
wherein the second cell DTX/DRX configuration is the default cell DTX/DRX configuration.

5. The method of claim 1, further comprising:
receiving an RRC configuration including a plurality of DTX/DRX configurations for the serving cell; and
obtaining information regarding a default cell DTX/DRX configuration among the plurality of DTX/DRX configurations,
wherein the second cell DTX/DRX configuration is the default cell DTX/DRX configuration.

6. The method of claim 1, further comprising:
receiving information related to maintaining a cell DTX/DRX activation indication for the serving cell,
wherein based on the information related to maintaining the cell DTX/DRX activation indication being a first value, the first cell DTX/DRX configuration is used as the second cell DTX/DRX configuration.

7. An apparatus comprising:
at least one processor; and
at least one memory operably connectable to the at least one processor and storing instructions that, when executed, cause the at least one processor to perform operations for a user equipment (UE), the operation comprising:
receiving a first cell discontinuous transmission (DTX)/discontinuous reception (DRX) configuration for a serving cell;
activating the first DTX/DRX configuration;
deactivating the serving cell for which the first DTX/DRX configuration is activated;
receiving an activation command for the deactivated serving cell; and
based on the activation command, i) activating the serving cell, and ii) activating a second cell DTX/DRX configuration for the serving cell.

8. A non-transitory computer-readable storage medium storing at least one program code including instructions that, when executed, cause at least one processor to perform operations for a user equipment (UE), the operation comprising:
receiving a first cell discontinuous transmission (DTX)/discontinuous reception (DRX) configuration for a serving cell;
activating the first DTX/DRX configuration;
deactivating the serving cell for which the first DTX/DRX configuration is activated;
receiving an activation command for the deactivated serving cell; and
based on the activation command, i) activating the serving cell, and ii) activating a second cell DTX/DRX configuration for the serving cell.

9. A method performed by a base station (BS), comprising:
transmitting a first cell discontinuous transmission (DTX)/discontinuous reception (DRX) configuration for a serving cell;
activating the first DTX/DRX configuration;
deactivating the serving cell for which the first DTX/DRX configuration is activated;
transmitting an activation command for the deactivated serving cell; and
based on the activation command, i) activating the serving cell, and ii) activating a second cell DTX/DRX configuration for the serving cell.

10. The method of claim 9, further comprising:
transmitting information regarding a default cell DTX/DRX configuration for the serving cell through radio resource control (RRC) signaling,
wherein the second cell DTX/DRX configuration is the default cell DTX/DRX configuration.

11. The method of claim 9, wherein the activation command includes information regarding a default cell DTX/DRX configuration for the serving cell, and
wherein the second cell DTX/DRX configuration is the default cell DTX/DRX configuration.

12. The method of claim 9, further comprising:
transmitting information regarding a default cell DTX/DRX configuration for the serving cell through downlink control information that schedules the activation command,
wherein the second cell DTX/DRX configuration is the default cell DTX/DRX configuration.

13. The method of claim 9, further comprising:
transmitting an RRC configuration including a plurality of DTX/DRX configurations for the serving cell; and
transmitting information regarding a default cell DTX/DRX configuration among the plurality of DTX/DRX configurations,
wherein the second cell DTX/DRX configuration is the default cell DTX/DRX configuration.

14. The method of claim 9, further comprising:
transmitting information related to maintaining a cell DTX/DRX activation indication for the serving cell,
wherein based on the information related to maintaining the cell DTX/DRX activation indication being a first value, the first cell DTX/DRX configuration is used as the second cell DTX/DRX configuration.

15. A base station (BS) comprising:
at least one processor; and
at least one memory operably connectable to the at least one processor and storing instructions that, when executed, cause the at least one processor to perform operations for the BS, the operations comprising:
transmitting a first cell discontinuous transmission (DTX)/discontinuous reception (DRX) configuration for a serving cell;
activating the first DTX/DRX configuration;
deactivating the serving cell for which the first DTX/DRX configuration is activated;
transmitting an activation command for the deactivated serving cell; and
based on the activation command, i) activating the serving cell, and ii) activating a second cell DTX/DRX configuration for the serving cell.
